# EUROPEAN PATENT SPECIFICATION

(11) **EP 1 608 580 B1**
(45) Date of publication and mention of the grant of the patent: **08.06.2011**
(21) Application number: 04714535.4
(22) Date of filing: 25.02.2004
(51) Int. Cl.: B66C 1/14, B66C 1/34, F16G 17/00

(54) **A CHAIN COUPLING COMPONENT**
KETTENVERBINDUNGSKOMPONENTE
ELEMENT D'ACCOUPLEMENT DE CHAINE

(30) Priority: 31.03.2003 SE 0300915
(43) Date of publication of application: 28.12.2005
(73) Proprietor: Frenolink Förvaltnings AB, 184 92 Akersberga (SE)
(72) Inventor: FREDRIKSSON, Lars, S-184 92 kersberga (SE)
(74) Representative: Modin, Jan
(86) International application number: PCT/SE2004/000254
(87) International publication number: WO 2004/087554

(56) References cited:
- EP-A1- 0 127 571
- EP-A1- 1 300 360
- US-A- 2 630 610
- US-A- 5 765 891

## Description

### FIELD OF THE INVENTION

The present invention relates to a chain coupling component, of the kind set forth in the preamble of appended claim 1, such as a lifting hook, a shackle, a chain tensioning device or the like, provided with an connecting head for secure and adjustable connection of an end link of an associated chain to the chain coupling component, said chain consisting of oblong links having a material thickness d, an outer width w and an outer length 1 which is longer than said outer width w, said connecting head comprising:
- an anchoring means for fixed connection of an end link of said chain to said connecting head, and
- a pocket-like configuration for positioning a selected link of said chain in a coupling position leaving a portion of said chain between said end link and said selected link.

Such chain coupling components are used e.g. in lifting systems where there is a need for convenient adjustment of the effective length of a chain portion carrying the component, for example a chain hanging down from a lifting crane and carrying a lifting hook. Components of this kind may also be used for adjusting the length of a chain portion utilised for pulling or latching an object in a non-vertical direction.

### BACKGROUND OF THE INVENTION AND PRIOR ART

Coupling components of the kind referred to above are previously known, e.g. from the Swedish patent specification SE 506 386 (Fredriksson). This document discloses a lifting hook provided with a connecting head which can be coupled to the end link of a lifting chain. The end link of the chain is anchored to a pin at the top of the head, and the adjacent portion of the chain is arranged as a more or less slack or non-loaded loop extending between the end link, fixed to the anchoring pin, and a selected link located in a coupling position in a pocket-like configuration between the hook and the anchoring pin. By selecting this link, the effective length of the remaining part of the chain (the loaded part) can be adjusted. It is also possible to let the chain extend directly upwards from the anchored end link, without being coupled to the pocket-like configuration.

However, the structure of this known chain coupling component has two drawbacks:
In the first place, the effective length of the chain is limited, since there have to be at least five links in the loop from the anchored link to the selected link pin the coupling position, thus making the first shortened length at least five links shorter than the full length of the chain.
Secondly, since the pocket-like configuration is located underneath the anchoring pin for the end link of the chain, the lifting hook will be subjected to side forces, upon being shortened, acting on the upper pert of the connecting head. Consequently, the hook will be tilted sideways somewhat upon being loaded after shortening of the lifting chain. This will cause bending forces on the hook. Also, the top end of the connecting head will project sideways from the chain and will entail a risk of catching some foreign object during a lifting operation.

European patent application EP 300360 describes a load engaging hook with shortening claw connected to it. The claw divides the chain into a load section and a blank section, both of which have a variable length. The claw has a fastener head for receiving the claw and of the load section of the chain and this claw has at least two jaws defining a slit in between.

### OBJECT OF THE INVENTION

Against this background, the object of the present invention is to provide a chain coupling component of the kind referred to above, which will maintain its orientation, irrespective of the load situation of the component. Thus, whether the chain coupled to the component is shortened or not, the component shall be oriented and located along the line or axis of the chain in loaded condition. Further objects are to permit easy handling of the chain coupling component, a secure retention of the selected link in the pocket-like configuration as well as safe and convenient adjustment of a chain being coupled to the component.

### SUMMARY OF THE INVENTION

According to the present invention, these objects are met for a chain coupling component having the features defined in appended claim 1. Thus, the connecting head is elongated and shaped generally like the letter "C", and is provided with a first or lower portion being connected to said component and being provided with the anchoring means, a mid portion located at the upright portion of the "C", and a second or upper portion being provided with the pocket-like configuration for accommodating the selected link. Moreover, the connecting head is provided with a central slot extending in the longitudinal direction of said connecting head, from said pocket-like configuration to a widened space permitting insertion of a different selected link into said central slot and said pocket-like configuration, said central slot being wider than said material thickness d of the oblong links but narrower than the outer width w of the oblong links. Hereby, upon anchoring said end link, a selected link can be positioned in said coupling position in said pocket-like configuration with the intermediate links either following an imaginary straight line between the selected link and the anchored lower link, at the side of the mid portion of the elongated connecting head, or forming a longer, slack chain portion so as to enable a desired shortening of the effective length of the chain.

Upon loading the chain coupling component, it will be located and oriented longitudinally generally in the direction of the load line, and this orientation will not change at full length or upon any shortening of the associated lifting chain.

A somewhat similar chain coupling component is disclosed in EP-8430056.3-B (Rud-Kettenfabrik) where the component comprises en eye for permanent connection to a ring member and a connecting head having a configuration almost like a "C". However, the free end portion of the connecting head has a coupling part and a slot which are not "pocket-like". A selected link placed in the slot of the coupling part will easily get loose as a consequence of a sideway movement when the component is handled. So, this known chain coupling component is not satisfactory from a safety point of view.

Further advantageous features of the present invention are stated in the dependent claims and will be apparent from the detailed description to follow.

Accordingly, the invention will be explained more fully below with reference to the appended drawings which illustrate various preferred embodiments.

### BRIEF DESCRIPTION OF THE DRAWINGS

Fig. 1 is a side view of a chain coupling component comprising a lifting hook, with the lower end portion of an associated chain at the top and a large ring coupled to the hook at the bottom;
Fig. 2 is a view of the hook of fig. 1, seen from the right in fig. 1 and partially in section, the links of the associated chain being indicated by dashed lines for clarity of the structure;
Figs. 3 and 4 are similar views as in fig. 2 illustrating how the associated lifting chain can be shortened and adjusted in effective length;
Figs. 9A through 9F illustrate various coupling devices constituting the lower part of the chain coupling component, the upper connecting head being left out; and
Fig. 10 is a side view of a chain coupling component comprising a swivel lifting hook;
Fig. 11 is a view from the right in fig. 10, partially in section;
Fig. 12 is a side view of a chain coupling component comprising a swivel lifting ring;
Fig. 13 is a view from the right in fig. 12, partially in section; and
Figs. 14 and 15 illustrate a modification of the first embodiment shown in figs. 1 and 2.

### DESCRIPTION OF PREFERRED EMBODIMENTS

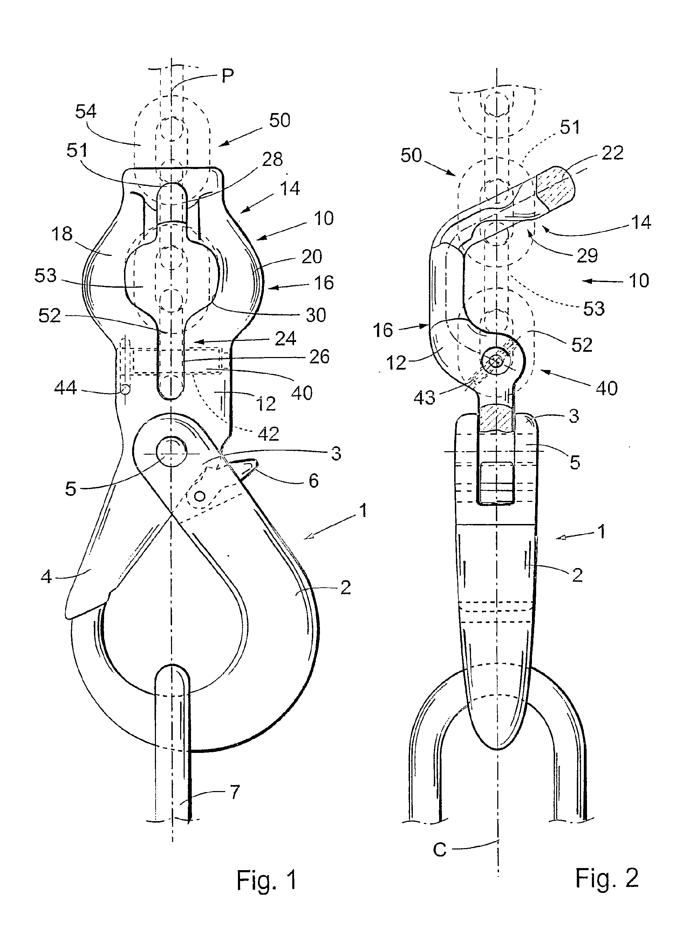

In the embodiment illustrated in figs. 1 through 4, the lower part of a lifting hook 1 (which is made of forged steel) is of conventional design and includes a main hook part 2 with a fork-like upper end portion 3, in which a safety lever 4 is pivotably journalled at a pivot pin 5. When loaded, the safety lever will be subjected to a force causing the safety lever 4 to close the throat or entrance opening of the hook 1, as shown in fig. 1 and as is generally known in the art. In the closed position, a spring loaded latch member 6 holds the lever 4 in its closed position, so that the load, in this case a large ring 7 (e.g. coupled to an object to be lifted by means of a number of chains), is safely retained in the hook and will not get loose, even if the hook 1 is handled and oriented in different ways.

In accordance with the invention, the upper part of the hook, in particular the upper part of the lever 4 (on the opposite side of the pivot pin 5), is formed integrally with a connecting head 10 having a new and useful structure.

As seen in fig. 2, the connecting head 10 has the general shape of the letter "C", with the lower end portion 12 of the "C" merging with the rest of the lever 4. The upper end portion 14 of the "C" is directed obliquely upwards (as seen on the drawing), i.e. away from hook, so as to form an open space between the upper and lower end portions. The mid portion 16 of the "C" is oriented vertically, in parallel to the central plane C of the main hook part 2, but is displaced somewhat sideways form this plane (to the left in fig. 2).

As is best seen in fig. 1, the connecting head 10 comprises two side parts 18,20 which extend longitudinally along the "C" from the lower end portion 12 all the way up to the upper end portion 14, where the two side parts are integrally united by a transverse portion 22 (fig. 2). The side parts 18, 20 form between themselves a continuous, longitudinally extending slot 24. The slot has a lower, relatively narrow slot portion 26 in the lower end portion 12 of the connecting head 10, an upper, also relatively narrow slot portion 28 in the upper end portion 14 of the connecting head 10, and a relatively wide mid portion forming a lead-through opening 30 for the associated lifting chain 50.

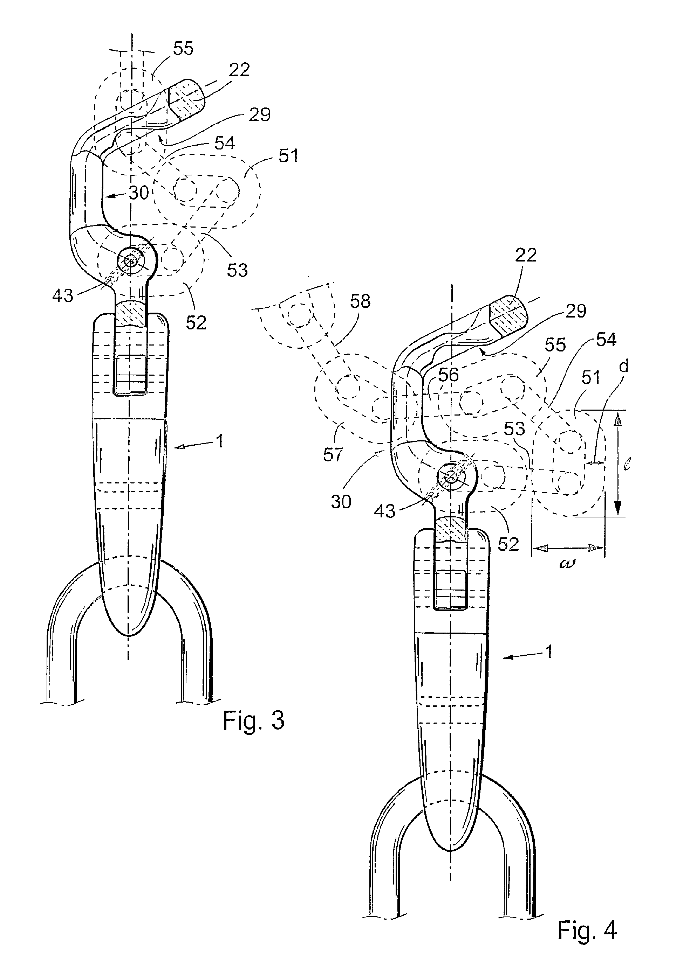

The steel links of the associated lifting chain 50 are oblong with an outer length 1, an outer width w and a material thickness or diameter d (fig. 4). The slot 24 of the connecting head 10 is dimensionally adapted to the dimensions of the chain links. Thus, the lower and upper slot portions 26, 28 are slightly wider than the material thickness d of the chain links so as to permit convenient displacement of such links along the slot while being oriented with the plane of the respective link in the central plane (P in fig.1) of the slot 24. As is previously known.per se in similar devices, e.g. from the above-mentioned Swedish patent specification 506 386, the edge portions of the respective slot are recessed with a curvature corresponding to the curved outer shape of the chain links. In this way, the links adjoining a link positioned in the slot will be accommodated smoothly.

The upper end portion 28 of the longitudinal central slot 24 is shaped so as to form a pocket-like configuration, generally denoted 29 (fig. 2). In this pocket-like configuration 29, a selected link 51 can be positioned in upright position so as to be safely guided and held in this position during use of the lifting component. In this position, the selected link 51 is located with its central longitudinal axis along the central plane C of the hook 1 (although turned 90 degrees in relation to this plane).

An end link 52 of the chain 50 is normally anchored to the lower part 12 of the connecting head 10, likewise with its central longitudinal axis in line with the central plane C of the hook 1. In the illustrated embodiment, the lower link 52 is anchored by means of an anchoring pin 40 inserted in a bore 42 and retained in this position by means of a locking pin 43 inserted in a hole 44.

In the arrangement illustrated figs. 1 and 2, the chain 50 forms a straight line, along the line of intersection between the planes P (fig.1) and C (fig.2). The end link 52 takes up the full load from the ring 7 and the lifting hook 1. The selected link 51, although it is located in the coupling position in the pocket-like configuration 29, hangs freely and only transfers the load between the adjoining links 53,54.

Now, the purpose of the connecting head 10 is to enable an effective shortening of the associated lifting chain 50. For this purpose, the mid portion of the longitudinal slot 24 is provided with the above-mentioned lead-through opening 30. This opening 30 is wider and longer than the outer width w (fig. 4) of the links of the associated chain 50. In order to adjust the effective length of the chain 50, the selected link 51 is first displaced from its coupling position (fig. 1 or fig. 3) along the upper end portion 28 of the slot to the lead-through opening 30. Thereupon, the adjoining chain links 54, 55 etc. are threaded or pulled through the lead-through opening 30 until a desired number of links have passed. Then, a new selected link, e.g. the link 55, is brought up along the upper end portion 28 of the slot to the pocket-like configuration 29 (fig.3). In this way, the chain 50 has been effectively made two links shorter.

The pulling through operation is illustrated further in fig. 4 where an additional link 56 has been drawn through the lead-through opening 30. In order to permit a smooth pulling, the lead-through opening should be wider and longer than the outer width w of the links by at least 5%, preferably by at least 10%, so that the adjoining link (57 in fig. 4) which is next in line can stand at some angle to the link (56 in fig. 4) in the opening 30 and still enter the opening.

When a new link as been selected to be located in the coupling position in the pocket-like configuration 29, as the link 55 in fig. 3, this link will actually take up the load in combination with the next lower adjoining link (54 in fig. 3), so that the load is now transferred from the main hook part 2 to the connecting head 10 at the upper, pocket-like configuration 29. In this situation, the anchoring link 52 and the intermediate links 51 and 53 are unloaded and form a slack chain portion. As will be seen from fig. 4, such a slack portion can have any desired length, and the effective length of the chain 50 can therefore be reduced by any desired number of links, including just one or two links.

It will be apparent from figs. 2 and 3 that the main hook part 2 and total hook 1, including the connecting head 10, will not change its orientation or location in relation to the associated lifting chain 50 when the chain is shortened (fig.3) as compared to the chain being used at full length (fig.1). So, when being loaded, the lifting hook 1 will always remain in line with the load line of the chain 50, and no part of the lifting hook 1 will project outwardly sideways as a consequence of the hook being tilted (as was the case with the hook disclosed in the above-mentioned Swedish patent specification).

In the shown embodiment, the plane C of the main hook part 2 and the plane P of the central slot 24 in the connecting head 10 are perpendicular to each other. This is not essential to the invention. So, these planes may be oriented at any mutual angle. Of course, this would mean that connecting head 10 is turned or rotated in relation to the rest of the lever 4. Moreover, although the shown embodiment is such that the anchoring link 52 takes up the full load when the chain 50 is straight, as in figs. 1 and 2, it is also possible to slightly decrease the distance between the anchoring pin 40 and the lower surface of the pocket-like configuration, so that the pocket-like configuration takes up the load even when the chain is configured in (nearly) full length. In such a case, it is not necessary for the anchoring link to be pivotable or movable in its anchored position. It may even be fixed in either of the positions shown in fig. 3 or 4. Also, it may then be fixed to the lower part 12 of the connecting head by welding or in any other desired manner.

The shape of the connecting head 10 may deviate from the ideal form of the letter "C". Thus, there should be a mid portion and two end portions extending generally sideways in the same direction (and not in opposite directions like in the letter "s"). These end portions may be substantially parallel or may converge towards each other or diverge away from each other. The essential feature is that a straight line from the anchoring means to the pocket-like configuration passes at some distance sideways from the mid portion or the connecting heads so that a chain portion may be located substantially along this straight line, as illustrated in fig. 2.

It is also important that the anchoring means for the end link is located at the end portion of the "C" being connected to or unitary with the component (e.g. the hook), whereas the pocket-like configuration for the selected link is adapted to securely hold the selected link and an adjoining link in position and is located at the end portion of the "C" being remote from the component. In this way, it is possible to shift between the chain configurations shown in figs. 2 and 3 while maintaining the orientation and relative position of the component along the load line (the intersection of the planes P and C, figs. 1 and 3).

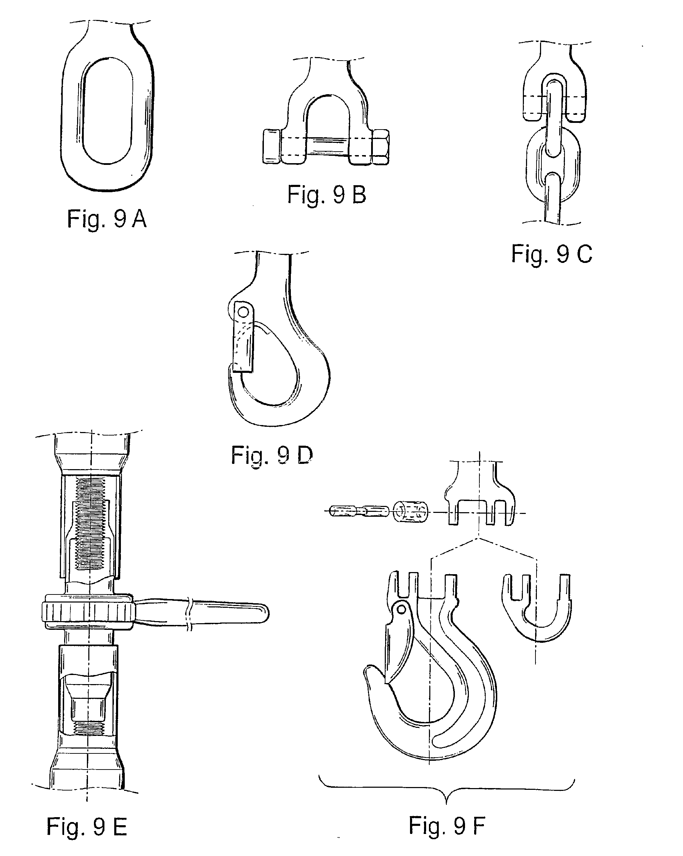

The chain coupling component may be constituted by different devices, e.g. a lifting eye (fig. 9A), a shackle (fig. 9B), a chain clevis (fig. 9C), an ordinary hook (fig. 3D), a chain tensioning device (fig. 9E) or a fork-like coupling device, possibly coupled to a lifting hook (fig. 9F) or some other chain coupling device.

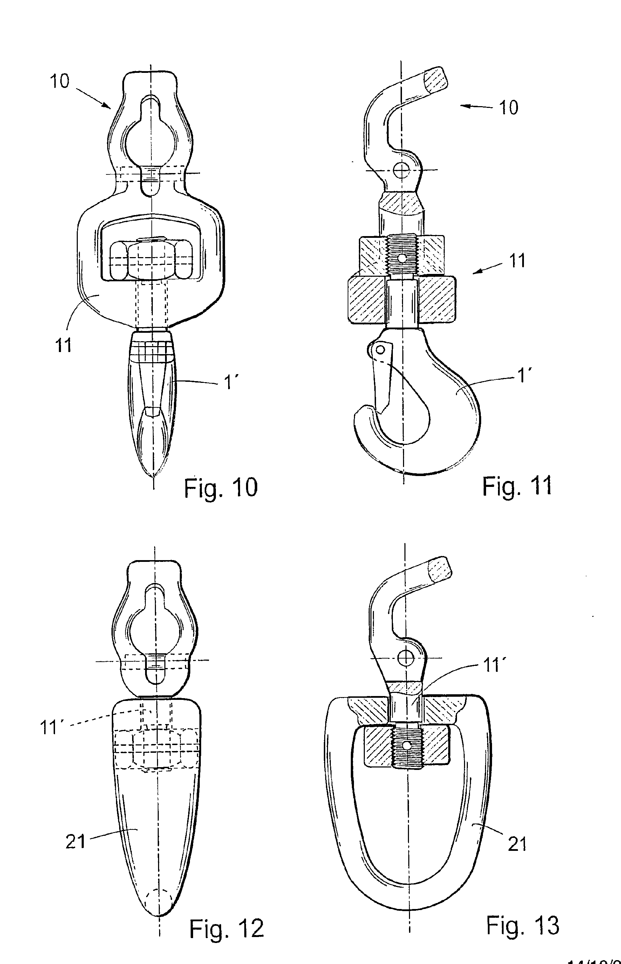

Two further embodiments of the chain coupling component are shown in figs. 10 through 13, including a swivel device in the form of a ring member 11 coupled to a lifting hook 1' (figs. 10,11) and in the form of a central shank portion 11' coupled to an elongated ring 21 (fig. 12,13), respectively.

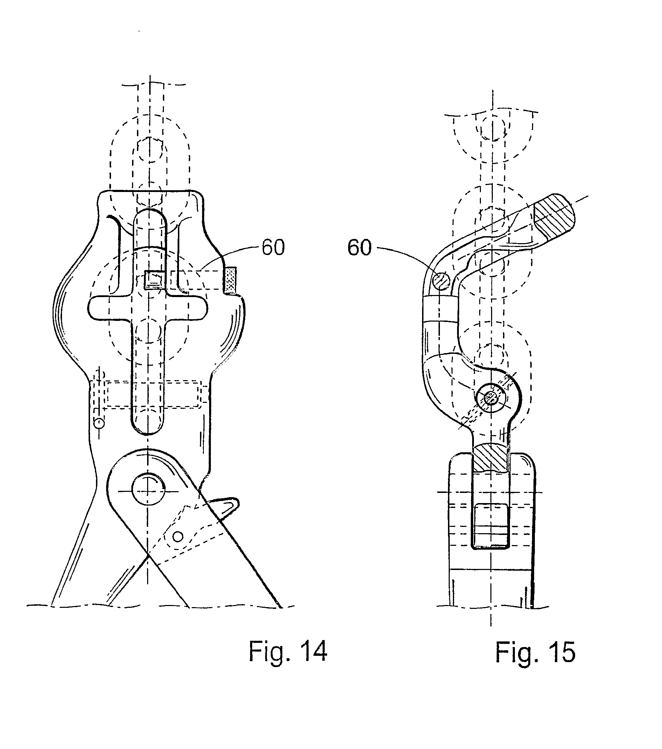

Of course, the various embodiments may be modified by those skilled in the art. For example, the lead-through opening 30 in the first embodiment may have a different form than the one shown in fig. 1, e.g. like "+" with a smooth, rounded contour permitting the pulling through of the chain links, as shown in figs. 14 and 15.

Moreover, if needed, a locking pin 60 may be arranged so as to securely lock the selected link in its position in the pocket-like configuration. Such a locking pin 60 may be spring-loaded into its locking position, as shown in figs. 14 and 15.

As indicated above, the "C" shape may vary considerably. However, the overall configuration should be such that the end portion being remote from the component is provided with the pocket-like configuration for safely retaining the "selected" link, the end portion being connected to or integral with the chain coupling component is provided with the anchoring means for the "end" link, and the load is applied to the component at a point located substantially along a load line extending at some distance sideways from the mid portion of the "C".

## Claims

1. A chain coupling component (1) provided with a connecting head (10) for secure and adjustable connection of an end portion (52) of an associated chain (50) to the chain coupling component, said chain consisting of oblong links having a material thickness d, an outer width w and an outer length 1 which is longer than said outer width, said connecting head (10) comprising:
- an anchoring means (40) for fixed connection of an end link (52) of said associated chain to said connecting head (10), and
- a pocket-like configuration (29) for accommodating a selected link (51) of said chain in a coupling position leaving a portion of said associated chain between said end link (52) and said selected link (51),
- said connecting head (10) is elongated and shaped generally like the letter "C",
- said generally "C"-shaped connecting head (10) is provided with
- a first or lower end portion being connected to said chain coupling component and being provided with said anchoring means for anchoring said end link (52),
- a mid portion located at the upright portion of the "C " , and
- a second or upper end portion being provided with said pocket-like configuration for accommodating
- said second or upper end portion of the connecting head being provided with a central slot expending in the longitudinal direction of said connecting head, from said pocket-like configuration to a widened space permitting insertion of a different selected link into said central slot and said pocket-like configuration,
- said central slot being wider than the material thickness d of said oblong links but narrower than the outer width w of said oblong links,
- whereby, upon anchoring said end link (52), a selected link (51;55) can be positioned in said coupling position in said pocket-like configuration with the intermediate links (53; 53,51,54) either following an imaginary straight line between the selected link (51) and the anchored end link (52), at the side of said mid portion (16) of said elongated connecting head (10), or forming to longer, slack chain portion so as to enable a desired shortening of the effective length of the chain
**characterized in that**:
said central slot (24) extends along said elongated connecting head (10) all the way from said pocket-like configuration (29) to said anchoring means (40), said widened space being formed by a widened portion of said slot forming a lead-through opening (30) at said mid portion of said elongated connecting head.

2. A chain coupling component as defined in claim 1, wherein said pocket-like configuration (29) is located along the load line (P,C) of the chain coupling component, such that the selected link (51; 55), when being positioned in said coupling position, is standing upright with its longitudinal central axis aligned with the load line.

3. A chain coupling component as defined in claim 2, wherein said central slot extends from said pocket-like configuration at a location substantially on said load line in a direction generally backwards or downwards towards said first or lower end portion so as to retain said selected link and one of its adjoining links in said pocket-like configuration unless said selected link is displaced generally backwards or downwards along said central slot to said widened space.

4. A chain coupling component as defined in claim 3, wherein the point of contact of said selected link, the point of contact of said end link and the point of contact of a load applied to said coupling component are all located along said load line.

5. A chain coupling component as defined in claims 1, wherein said anchoring means comprises a transverse pin (40) for anchoring said lower link (52), said transverse pin (40) being movable between a locking position and a releasing position.

6. A chain coupling component as defined in claim 8, wherein said transverse pin (40) extends across said lower end portion (26) of said longitudinal slot when being in said locking position.

7. A chain coupling component as defined in claim 1, comprising a lifting hook, a lifting eye, a lifting ring, a shackle, a chain clevis, a chain tensioner, a shank, a swivel device, a wire rope attachment, a web sling attachment, a fibre roundsling attachment, a load measuring scale, a shock absorber, a force sensor, a vibration sensor or a coupling device.

## Patentansprüche

1. Kettenkupplungsanordnung (1) mit einem Verbindungskopf (10) zum sicheren und einstellbaren Verbinden eines Endabschnitts (52) einer zugehörigen Kette (50) mit der Kettenkupplungsanordnung, wobei die Kette aus länglichen Gliedern mit einer Materialstärke d, einer äußeren Breite w und einer äußeren Länge 1, die größer ist als die äußere Breite, besteht und wobei der Verbindungskopf (10) folgende Merkmale aufweist:
Verankerungsmittel (40) für die feste Verbindung eines Endgliedes (52) der zugeordneten Kette mit dem Verbindungskopf (10), und
eine taschenartige Konfiguration (29) zum Aufnehmen eines ausgewählten Gliedes (51) der Kette in einer Kupplungsposition, wobei ein Teil der zugeordneten Kette zwischen dem Endglied (52) und dem ausgewählten Glied (51) bleibt,
wobei
der Verbindungskopf (10) länglich ist und grundsätzlich wie der Buchstabe, "C" geformt ist,
der grundsätzlich "C"-förmige Verbindungskopf (10) folgende Merkmale aufweist:
ein erster oder unterer Endabschnitt, der mit der Kettenkupplungsanordnung verbunden ist und die Verankerungsmittel zum Verankern des Endgliedes (52) aufweist,
ein mittlerer Abschnitt, der in dem aufrechten Teil des "C"s liegt, und ein zweiter oder oberer Abschnitt, der die taschenartige Konfiguration zum Aufnehmen des ausgewählten Gliedes (51) aufweist,
der zweite oder obere Endabschnitt des Verbindungskopfes einen zentralen Schlitz aufweist, der sich in der Längsrichtung des Verbindungskopfes, von der taschenartigen Konfiguration zu einem erweiterten Raum erstreckt und das Einfügen eines anderen ausgewählten Gliedes in den zentralen Schlitz und die taschenartige Konfiguration erlaubt,
der zentrale Schlitz breiter ist als die Materialstärke, d des länglichen Gliedes, jedoch schmaler als die äußere Breite w des länglichen Gliedes,
wobei bei Verankerung des Endgliedes (52) ein ausgewähltes Glied (51; 55) in der Kupplungsposition in der taschenartigen Konfiguration positioniert werden kann, wobei die Zwischenglieder (53; 53, 51, 54) entweder einer imaginären geraden Linie zwischen dem ausgewählten Glied (51) und dem verankerten Endglied (52) neben dem mittleren Abschnitt (16) des länglichen Verbindungskopfes (10) folgen oder einen längeren durchhängenden Kettenabschnitt bilden, so dass eine gewünschte Verkürzung der effektiven Länge der Kette möglich ist,
**dadurch gekennzeichnet, dass**
der zentrale Schlitz (24) sich entlang des länglichen Verbindungskopfes (10) über den ganzen Weg von der taschenartigen Konfiguration (29) zu den Verankerungsmitteln (40) erstreckt, wobei der erweitere Raum durch einen erweiterten Abschnitt des Schlitzes mit einer Durchführöffnung (30) in der Mitte des länglichen Verbindungskopfes gebildet ist.

2. Kettenkupplungsanordnung nach Anspruch 1, wobei die taschenartige Konfiguration (29) entlang der Lastlinie (P, C) der Kettenkupplungsanordnung angeordnet ist, so dass das ausgewählte Glied (51; 55) aufrecht steht und seine zentrale Längsachse zu der Lastlinie ausgerichtet ist, wenn es in der Kupplungsposition ist.

3. Kettenkupplungsanordnung nach Anspruch 2, wobei sich der zentrale Schlitz von der taschenartigen Konfiguration bei einer Stelle, die im wesentlichen auf der Lastlinie liegt, in eine Richtung, die grundsätzlich nach hinten oder unten gerichtet ist, in Richtung des ersten oder unteren Endabschnitts erstreckt, um das ausgewählte Glied und eines seiner benachbarten Glieder in der taschenartigen Konfiguration zu halten, außer wenn das ausgewählte Glied grundsätzlich nach hinten oder unten entlang dem zentralen Schlitz zu dem erweiterten Raum verschoben wird.

4. Kettenkupplungsanordnung nach Anspruch 3, wobei der Kontaktpunkt des ausgewählten Gliedes, der Kontaktpunkt des Endgliedes und der Kontaktpunkt der Last, die an die Kupplungsanordnung angelegt wird, alle entlang der Lastlinie angeordnet sind.

5. Kettenkupplungsanordnung nach Anspruch 1, wobei die Verankerungsmittel einen Querpin (40) zum Verankern des unteren Gliedes (52) aufweisen, wobei der Querpin (40) zwischen einer Verriegelungsposition und einer Freigabeposition bewegbar ist.

6. Kettenkupplungsanordnung nach Anspruch 5, wobei der Querpin (40) sich über den unteren Endabschnitt (26) des Längsschlitzes erstreckt, wenn er in seiner Verriegelungsposition ist.

7. Kettenkupplungsanordnung nach Anspruch 1, umfassend einen Hebehaken, ein Hebeauge, einen Hebering, einen Schäckel, einen Kettenbügel, einen Kettenspanner, einen Schaft, eine Rotationsvorrichtung, eine Drahtseilbefestigung, eine Gurtstropbefestigung, eine Faser-Rundschlingenbefestigung, eine Lastmessskala, einen Stoßdämpfer, einen Kraftsensor, einen Vibrationssensor oder eine Kupplungsvorrichtung.

## Revendications

1. Élément d'accouplement de chaîne (1) pourvu d'une tête de connexion (10) pour le raccordement sûr et réglable d'une partie d'extrémité (52) d'une chaîne associée (50) à l'élément d'accouplement de chaîne, ladite chaîne consistant en maillons oblongs ayant une épaisseur de matériau d, une largeur externe w et une longueur externe 1 qui est supérieure à ladite largeur externe, ladite tête de connexion (10) comprenant :
- un moyen d'ancrage (40) pour le raccordement fixe d'un maillon d'extrémité (52) de ladite chaîne associée à ladite tête de connexion (10), et
- une configuration de type poche (29) destinée à recevoir un maillon sélectionné (51) de ladite chaîne dans une position d'accouplement en laissant une partie de ladite chaîne associée entre ledit maillon d'extrémité (52) et ledit maillon sélectionné (51),
- ladite tête de connexion (10) est allongée et a généralement la forme d'un « C »,
- ladite tête de connexion (10) généralement en forme de « C » est pourvue :
- d'une première partie d'extrémité ou partie d'extrémité inférieure raccordée audit élément d'accouplement de chaîne et pourvue dudit moyen d'ancrage (40) destiné à ancrer ledit maillon d'extrémité (52),
- d'une partie centrale située en la partie verticale du « C », et
- d'une seconde partie d'extrémité ou partie d'extrémité supérieure pourvue de ladite configuration de type poche destinée à recevoir ledit maillon sélectionné (51),
- ladite seconde partie d'extrémité ou partie d'extrémité supérieure de la tête de connexion étant pourvue d'une fente centrale s'étendant dans la direction longitudinale de ladite tête de connexion, de ladite configuration de type poche à un espace élargi permettant l'insertion d'un maillon sélectionné différent dans ladite fente centrale et ladite configuration de type poche,
- ladite fente centrale étant plus large que l'épaisseur de matériau d desdits maillons oblongs mais plus étroite que la largeur externe w desdits maillons oblongs,
- grâce à quoi, lors de l'ancrage dudit maillon d'extrémité (52), un maillon sélectionné (51 ; 55) peut être positionné dans ladite position d'accouplement dans ladite configuration de type poche, les maillons intermédiaires (53 ; 53, 51, 54) soit suivant une ligne droite imaginaire entre le maillon sélectionné (51) et le maillon d'extrémité ancré(52), sur le côté de ladite partie centrale (16) de ladite tête de connexion (10) allongée, soit formant une partie de chaîne lâche, plus longue, de manière à permettre un raccourcissement souhaité de la longueur effective de la chaîne
**caractérisé en ce que**
ladite fente centrale (24) s'étend le long de ladite tête de connexion (10) allongée sur toute la distance allant de ladite configuration de type poche (29) audit moyen d'ancrage (40), ledit espace élargi étant formé par une partie élargie de ladite fente formant une ouverture conductrice (30) en ladite partie centrale de ladite tête de connexion allongée.

2. Élément d'accouplement de chaîne selon la revendication 1, dans lequel ladite configuration de type poche (29) est située le long de la ligne de charge (P, C) de l'élément d'accouplement de chaîne, de manière que le maillon sélectionné (51 ; 55), lorsqu'il est positionné dans ladite position d'accouplement, se tienne vertical, son axe central longitudinal étant aligné avec la ligne de charge.

3. Élément d'accouplement de chaîne selon la revendication 2, dans lequel ladite fente centrale s'étend de ladite configuration de type poche en un emplacement sensiblement sur ladite ligne de charge dans une direction généralement vers l'arrière ou vers le bas vers ladite première partie d'extrémité ou partie d'extrémité inférieure afin de retenir ledit maillon sélectionné et l'un de ses maillons adjacents dans ladite configuration de type poche à moins que ledit maillon sélectionné soit déplacé généralement vers l'arrière ou vers le bas le long de ladite fente centrale jusqu'audit espace élargi.

4. Élément d'accouplement de chaîne selon la revendication 3, dans lequel le point de contact dudit maillon sélectionné, le point de contact dudit maillon d'extrémité et le point de contact d'une charge appliquée sur ledit élément d'accouplement sont tous situés le long de ladite ligne de charge.

5. Élément d'accouplement de chaîne selon la revendication 1, dans lequel ledit moyen d'ancrage comprend une tige transversale (40) pour ancrer ledit maillon inférieur (52), ladite tige transversale (40) étant mobile entre une position de verrouillage et une position de libération.

6. Élément d'accouplement de chaîne selon la revendication 1, dans lequel ladite tige transversale (40) s'étend en travers de ladite partie d'extrémité inférieure (26) de ladite fente longitudinale lorsqu'elle se trouve dans ladite position de verrouillage.

7. Élément d'accouplement de chaîne selon la revendication 1, comprenant un crochet de levage, un oeilleton de levage, un anneau de levage, une manille, une manille d'assemblage de chaîne, un tendeur de chaîne, une partie verticale, un dispositif pivotant, une amarre de câble métallique, une amarre de sangle de levage, une amarre d'élingue ronde en fibres, une échelle de mesure de charge, un amortisseur de chocs, un capteur de force, un capteur de vibration ou un dispositif d'accouplement.
